# EUROPEAN PATENT APPLICATION

(11) **EP 4 804 390 A1**
(43) Date of publication of application: **09.09.2026**
(21) Application number: 24884322.9
(22) Date of filing: 26.09.2024
(51) Int. Cl.: H02K 9/197, H02K 1/20, H02K 1/32, H02K 5/20

(54) **MOTOR, ELECTRIC ASSEMBLY AND VEHICLE**

(30) Priority: 31.10.2023 CN 202322942518 U
(71) Applicant: BYD Company Limited, Shenzhen, Guangdong 518118 (CN)
(72) Inventor: WANG, Ning, Shenzhen, Guangdong 518118 (CN); DUAN, Gang, Shenzhen, Guangdong 518118 (CN); LIU, Linna, Shenzhen, Guangdong 518118 (CN); REN, Qing, Shenzhen, Guangdong 518118 (CN); GUO, Wanglin, Shenzhen, Guangdong 518118 (CN)
(74) Representative: Mathys & Squire
(86) International application number: PCT/CN2024/121376
(87) International publication number: WO 2025/092316

(57) **Abstract**

A vehicle, comprising an electric assembly or a motor. The electric assembly includes a motor. The motor includes a housing, a stator assembly, a rotor assembly, a first cooling pipeline and a second cooling pipeline. A cooling medium flowing through the first cooling pipeline is different from a cooling medium flowing through the second cooling pipeline, the first cooling pipeline is used for cooling the stator assembly, the second cooling pipeline is used for cooling the rotor assembly, and at least part of the second cooling pipeline is formed on the housing.

## Description

### CROSS-REFERENCE TO RELATED APPLICATIONS

The present disclosure claims priority to Chinese Patent Application No. 202322942518.4 filed with the China National Intellectual Property Administration on October 31, 2023, titled "MOTOR, ELECTRIC ASSEMBLY AND VEHICLE", which is incorporated herein by reference in its entirety.

### FIELD

The present disclosure relates to the technical field of vehicles, and in particular, to a motor, an electric assembly, and a vehicle.

### BACKGROUND

In motors of related art, oil cooling or water cooling methods are typically adopted to cool and reduce the temperature of a stator assembly and a rotor assembly. However, in the related art, for motors using oil cooling methods, it is difficult to ensure uniform oil flow to all parts, resulting in poor cooling uniformity. For motors employing water cooling methods, it is impossible to cool the rotor of the motor, and furthermore, the coolant cannot be sprayed onto the main heat-generating regions of the stator assembly or the rotor assembly, leading to low heat dissipation efficiency.

### SUMMARY

The present disclosure aims to solve at least one of the technical problems existing in the prior art. Therefore, one objective of the present disclosure is to propose a motor, the motor being capable of cooling a stator assembly and a rotor assembly through different cooling media, respectively, so as to improve the cooling efficiency for the stator assembly and the rotor assembly, achieve better cooling uniformity and heat dissipation effect, and be beneficial for improving the output efficiency of the motor.

The present disclosure further provides an electric assembly including the above motor.

The present disclosure further provides a vehicle including the above electric assembly.

To achieve the above objectives, according to a first aspect of embodiment of the present disclosure, a motor is provided. The motor includes: a housing, a stator assembly, a rotor assembly, a first cooling pipe, and a second cooling pipe. The cooling medium flowing through the first cooling pipeline is different from that flowing through the second cooling pipeline. The first cooling pipeline is configured to cool the stator assembly, and the second cooling pipeline is configured to cool the rotor assembly. At least a portion of the second cooling pipeline is formed on the housing.

The motor according to the embodiment of the present disclosure can cool the stator assembly and the rotor assembly respectively with different cooling media, so as to improve the cooling efficiency for the stator assembly and the rotor assembly, make the cooling uniformity and the heat dissipation effect better, and be beneficial for improving the output efficiency of the motor 1.

According to some embodiments of the present disclosure, the housing includes a main housing and an end cover. The main housing and the end cover form a receiving cavity. The stator assembly and the rotor assembly are arranged within the receiving cavity. At least a portion of the second cooling pipeline is formed on the main housing and/or the end cover.

According to some embodiments of the present disclosure, the rotor assembly includes a rotor body and a bearing. The rotor body is mounted on the main housing and the end cover via the bearing. The second cooling pipeline includes a first coolant passage formed on the main housing. A first liquid spray hole is arranged on the main housing, the first liquid spray hole is in communication with the first coolant passage, and the first liquid spray hole is configured to spray coolant toward the bearing; and/or a second liquid spray hole is arranged on the main housing, the second liquid spray hole is in communication with the first coolant passage, and the second liquid spray hole is configured to spray coolant toward the rotor body.

According to some embodiments of the present disclosure, the second cooling pipeline further includes a second coolant passage formed on the end cover, a third liquid spray hole is arranged on the end cover, the third liquid spray hole is in communication with the second coolant passage, and the third liquid spray hole is configured to spray coolant toward the bearing; and/or a fourth liquid spray hole is arranged on the end cover, the fourth liquid spray hole is in communication with the second coolant passage, and the fourth liquid spray hole is configured to spray coolant toward the rotor body.

According to some embodiments of the present disclosure, the rotor body includes a rotating shaft, a first end ring, and a second end ring. The first end ring and the second end ring are respectively arranged at two ends of the rotating shaft. The second liquid spray hole is configured to spray coolant toward the first end ring, and the fourth liquid spray hole is configured to spray coolant toward the second end ring.

According to some embodiments of the present disclosure, the rotating shaft is a hollow shaft.

According to some embodiments of the present disclosure, the motor further includes a cooling jacket. At least a portion of the first cooling pipeline is formed on the cooling jacket. The cooling jacket is arranged on the outer periphery of the stator assembly.

According to some embodiments of the present disclosure, a sealing ring is arranged between an outer peripheral surface of the cooling jacket and an inner peripheral surface of the main housing.

According to some embodiments of the present disclosure, the main housing includes an annular portion and an end portion. The annular portion surrounds the stator assembly. The cooling jacket is located between the annular portion and the stator assembly. The end portion is connected to one end of the annular portion and retains the stator assembly and the cooling jacket. The rotor assembly passes through the end portion. The cooling jacket is connected to the end portion.

According to some embodiments of the present disclosure, the motor further includes a locating pin and a fastener. The cooling jacket and the end portion are positioned relative to each other by the locating pin. The fastener passes through the end portion and is connected to the cooling jacket.

According to some embodiments of the present disclosure, the motor further includes a radiator and a liquid inlet passage. The radiator is arranged in the main housing. The liquid inlet passage is arranged in the main housing. An inlet of the radiator is in communication with the liquid inlet passage. An outlet of the radiator is in communication with the second cooling pipeline. The radiator is configured to exchange heat with a coolant flowing through the second cooling pipeline.

According to some embodiments of the present disclosure, the liquid inlet passage includes a first oil passage, a second oil passage, and a third oil passage. A lower end of the first oil passage is arranged with a rotor coolant inlet. The first oil passage extends obliquely from bottom to top toward an interior of the main housing. A lower end of the second oil passage is connected to an upper end of the first oil passage. The second oil passage extends obliquely from bottom to top toward an exterior of the main housing. A lower end of the third oil passage is connected to an upper end of the second oil passage. An upper end of the third oil passage is in communication with the radiator. The third oil passage extends obliquely from bottom to top toward the interior of the main housing.

According to some embodiments of the present disclosure, the first coolant passage includes a fourth oil passage and a fifth oil passage. The fourth oil passage extends obliquely downward from top to bottom toward an exterior of the main housing. An upper end of the fifth oil passage is connected to a lower end of the fourth oil passage. The fifth oil passage extends obliquely downward from top to bottom toward an interior of the main housing.

According to a second aspect of embodiments of the present disclosure, an electric assembly is provided. The electric assembly includes a speed reducer and the motor according to the first aspect of embodiments of the present disclosure. An output shaft of the speed reducer and the rotating shaft of the motor are coaxially arranged.

With the electric assembly according to the second aspect of embodiment of the present disclosure, by utilizing the motor according to the first aspect of embodiment of the present disclosure, different cooling media can be used to respectively cool the stator assembly and the rotor assembly, so as to improve the cooling efficiency for the stator assembly and the rotor assembly, achieving better cooling uniformity and heat dissipation effect, and beneficial for improving the output efficiency of the motor.

According to a third aspect of embodiment of the present disclosure, a vehicle is provided. The vehicle includes the motor according to the first aspect of embodiment of the present disclosure or the electric assembly according to the second aspect of embodiment of the present disclosure.

With the vehicle according to the third aspect of embodiment of the present disclosure, by utilizing the motor according to the first aspect of embodiment of the present disclosure or the electric assembly according to the second aspect of embodiment of the present disclosure, the stator assembly and the rotor assembly can be cooled respectively, so as to improve the cooling efficiency for the stator assembly and the rotor assembly, achieving better cooling uniformity and heat dissipation effect, and beneficial for improving the output efficiency of the motor.

Additional aspects and advantages of the present disclosure will be set forth in part in the description that follows, and in part will be obvious from the description, or may be learned through practice of the present disclosure.

### BRIEF DESCRIPTION OF THE DRAWINGS

The above and/or additional aspects and advantages of the present disclosure will become apparent and readily understood from the description of embodiments taken in conjunction with the following drawings, in which:
FIG. 1 is a cross-sectional view of a motor according to an embodiment of the present disclosure;
FIG. 2 is a schematic structural diagram of a housing of a motor according to an embodiment of the present disclosure;
FIG. 3 is a schematic structural diagram from another perspective of the housing of the motor according to the embodiment of the present disclosure;
FIG. 4 is a schematic structural diagram of an end cover of a motor according to an embodiment of the present disclosure;
FIG. 5 is a cross-sectional view of a liquid-cooled radiator of a motor according to an embodiment of the present disclosure;
FIG. 6 is a schematic structural diagram of a cooling jacket of a motor according to an embodiment of the present disclosure;
FIG. 7 is a schematic structural diagram from another perspective of a cooling jacket of a motor according to an embodiment of the present disclosure;
FIG. 8 is a schematic structural diagram of a locating pin and a fastener of a motor according to an embodiment of the present disclosure;
FIG. 9 is a schematic block diagram of an electric assembly according to an embodiment of the present disclosure;
FIG. 10 is a schematic block diagram of a vehicle according to an embodiment of the present disclosure;
FIG. 11 is another schematic block diagram of a vehicle according to an embodiment of the present disclosure.

### Reference Numeral Explanation:

Vehicle 2000;
Electric assembly 1000;
Motor 1;Speed reducer2;
Housing 700; Main housing 100; Second cooling pipeline 110; Liquid inlet passage 120; First oil passage 121; Rotor coolant inlet 122; Second oil passage 123; Third oil passage 124; First coolant passage 130; Fourth oil passage 131; Fifth oil passage 133; Second rotor coolant outlet 134; First liquid spray hole 135; Second liquid spray hole 136; Stator coolant inlet 140; Stator coolant outlet 150; Annular portion 160; Liquid return passage 161; End portion 170; First passage 171; Liquid return hole 173; Second locating pin hole 174; Second fastener hole 175;
Stator assembly 200;
Rotor assembly 300; Rotor body 301; Rotating shaft 310; Bearing 323; First bearing 320; Second bearing 330; First end ring 340; Second end ring 350;
Cooling jacket 400; First cooling pipeline 410; First locating pin hole 420; First fastener hole 430; Sealing groove 440; Sealing ring 450;
Radiator 500; Heat dissipation cavity 510; Cooling inlet 520; First cooling outlet 530; Second cooling outlet 540; Inlet 501; Outlet 502;
End cover 600; Second coolant passage 610; Third liquid spray hole 612; Fourth liquid spray hole 613; Liquid return groove 620; Receiving cavity 601;
Locating pin 800; Fastener 900.

### DETAILED DESCRIPTION

Embodiments of the present disclosure are described in detail below, and the embodiments described with reference to the accompanying drawings are exemplary.

In the description of the present disclosure, it will be understood that the orientation or positional relationships indicated by the terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the drawings, and are merely for ease of description and simplification of description.

In the description of the present disclosure, the "first feature" and the "second feature" may include one or more of the features.

In the description of the present disclosure, the meaning of "a plurality" is two or more.

In the description of the present disclosure, the first feature being "above" or "below" the second feature may include that the first and second features are in direct contact, or may include that the first and second features are not in direct contact but are in contact by a further feature therebetween.

In the description of the present disclosure, the first feature being "on", "up" and "above" the second feature includes the first feature being directly above and obliquely above the second feature, or simply means that the first feature is horizontally higher than the second feature.

With reference to the accompanying drawings, a motor 1 according to an embodiment of the present disclosure is described below.

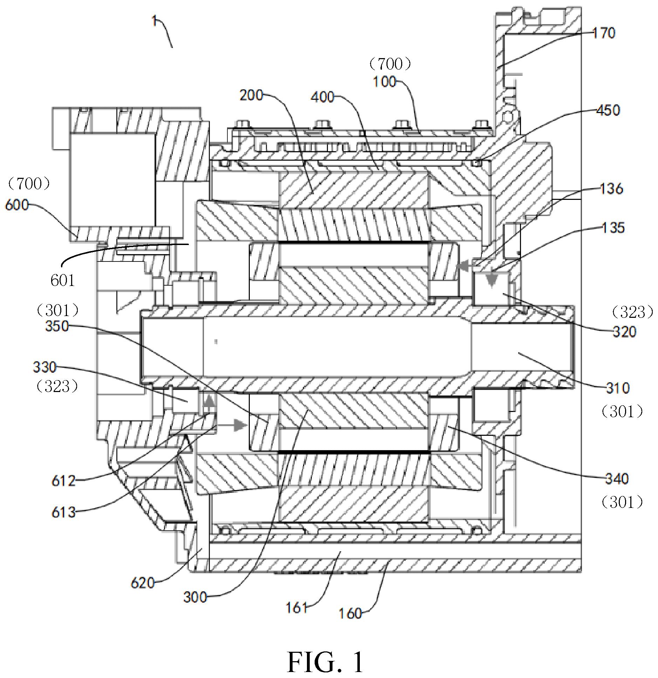

As shown in FIGS. 1 to 7, a motor 1 according to an embodiment of the present disclosure includes a housing 700, a stator assembly 200, a rotor assembly 300, a first cooling pipe 410, and a second cooling pipe 110.

The cooling medium flowing through the first cooling pipeline 410 is different from that flowing through the second cooling pipeline 410. The first cooling pipeline 410 is configured to cool the stator assembly 200, and the second cooling pipeline 110 is configured to cool the rotor assembly 300. At least a portion of the second cooling pipeline 110 is formed on the housing 700.

For example, the cooling medium in the first cooling pipeline 410 may be water or other liquid, and the coolant in the second cooling pipeline 110 may be oil.

The cooling medium can continuously flow in the first cooling pipeline 410. The heat generated by the stator winding of the stator assembly 200 can be transferred to the cooling medium in the first cooling pipeline 410, so that the heat of the stator assembly 200 can be taken away by the flow of the cooling medium in the first cooling pipeline 410, the cooling of the stator assembly 200 is realized. This configuration is conducive to improving the uniformity of cooling for the stator assembly 200, ensuring that multiple portions of the stator assembly 200 can be uniformly cooled, and beneficial for enhancing the cooling effect on the stator assembly 200.

Furthermore, the motor 1 can guide the cooling medium through the second cooling pipeline 110. The cooling medium can flow along the second cooling pipeline 110, and then be sprayed onto the rotor assembly 300 to directly cool the main heat-generating regions of the rotor assembly 300 through the cooling medium, which is beneficial for improving the heat dissipation efficiency of the rotor assembly 300 and achieving a better cooling effect.

Thus, in the motor 1 according to the embodiment of the present disclosure, a cooling medium, such as oil, can be sprayed toward the rotor assembly 300 through the second cooling pipeline 110 to cool the main heat-generating regions of the rotor assembly 300, thereby ensuring the cooling effect on the rotor assembly 300.Simultaneously, heat exchange can be performed between the cooling medium in the first cooling pipeline 410 and the stator assembly 200, realizing liquid cooling of the stator assembly 200 to improve the uniformity of cooling for the stator assembly 200. Consequently, sufficient cooling for both the stator assembly 200 and the rotor assembly 300 can be achieved, balancing the uniformity of cooling and high heat dissipation efficiency. This configuration can not only reduce the risk of overheating of the motor 1 but also effectively lower the thermal loss of the motor 1, which is beneficial for improving the output efficiency of the motor 1.

In this way, the motor 1 according to the embodiment of the present disclosure can cool the stator assembly 200 and the rotor assembly 300 respectively with different cooling media, so as to improve the cooling efficiency for the stator assembly 200 and the rotor assembly 300, make the cooling uniformity and the heat dissipation effect better, and be beneficial for improving the output efficiency of the motor 1.

In some embodiments of the present disclosure, as shown in FIGS. 1 to 4, the housing 700 includes a main housing 100 and an end cover 600, the main housing 100 and the end cover 600 form a receiving cavity 601, the stator assembly 200 and the rotor assembly 300 are arranged within the receiving cavity 601, and at least a portion of the second cooling pipeline 110 is formed on the main housing 100 and/or the end cover 600.

That is to say, a portion of the second cooling pipeline 110 may be formed on the main housing 100, and another portion of the second cooling pipeline 110 may be formed on the end cover 600; alternatively, the second cooling pipeline 110 is formed only on the main housing 100; alternatively, the second cooling pipeline 110 may be formed only on the end cover 600. In this way, the second cooling pipeline 110 can be more evenly distributed on the housing 700, so that the cooling medium can flow to a plurality of parts of the motor 1 through the second cooling pipeline 110, enabling the cooling medium to cool the rotor assembly 300 more effectively and further improving the cooling efficiency for the rotor assembly 300.

In some embodiments of the present disclosure, as shown in FIG. 1, the rotor assembly 300 includes a rotor body 301 and a bearing 323.

The rotor body 301 is mounted on the main housing 100 and the end cover 600 via the bearing 323.

The second cooling pipeline 110 includes a first coolant passage 130 formed on the main housing 100. A first liquid spray hole 135 is arranged on the main housing 100, the first liquid spray hole 135 is in communication with the first coolant passage 130, and the first liquid spray hole 135 is configured to spray coolant toward the bearing 323; and/or a second liquid spray hole 136 is arranged on the main housing 100, the second liquid spray hole 136 is in communication with the first coolant passage 130, and the second liquid spray hole 136 is configured to spray coolant toward the rotor body 301.

The first liquid spray hole 135 may extend in the radial direction of the main housing 100, and the second liquid spray hole 136 may extend in the axial direction of the main housing 100.

Thus, a portion of the cooling medium can flow from the first coolant passage 130 to the first liquid spray hole 135, and be sprayed onto the bearing 323 through the first liquid spray hole 135 to cool the bearing 323, while another portion of the cooling medium can flow from the first coolant passage 130 to the second liquid spray hole 136, and be sprayed onto the rotor body 301 through the second liquid spray hole 136 to cool the rotor body 301. As a result, the cooling medium can be sprayed onto a plurality of portions of the rotor assembly 300, further improving the cooling efficiency for the rotor assembly 300.

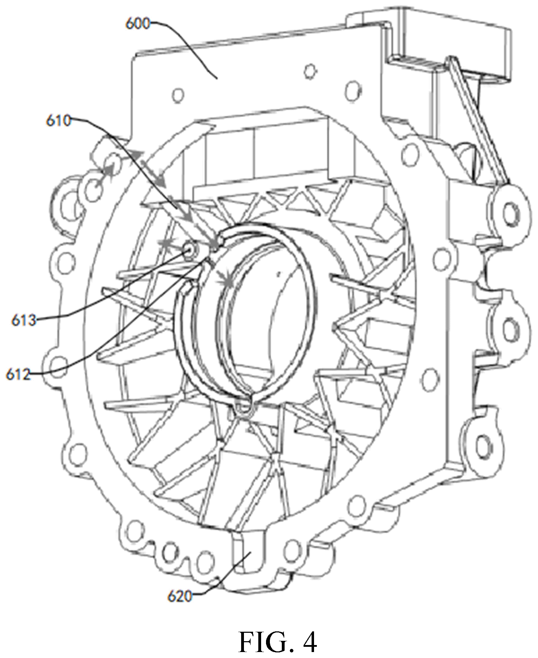

Further, as shown in FIG. 4, the second cooling pipeline 110 further includes a second coolant passage 610 formed on the end cover 600, a third liquid spray hole 612 is arranged on the end cover 600, the third liquid spray hole 612 is in communication with the second coolant passage 610, and the third liquid spray hole 612 is configured to spray coolant toward the bearing 323; and/or a fourth liquid spray hole 613 is arranged on the end cover 600, the fourth liquid spray hole 613 is in communication with the second coolant passage 610, and the fourth liquid spray hole 613 is configured to spray coolant toward the rotor body 301.

The third liquid spray hole 612 may extend in the radial direction of the main housing 100, and the fourth liquid spray hole 613 may extend in the axial direction of the main housing 100.

Thus, a portion of the cooling medium can flow from the second coolant passage 610 to the third liquid spray hole 612, and be sprayed onto the bearing 323 through the third liquid spray hole 612 to cool the bearing 323, while another portion of the cooling medium can flow from the second coolant passage 610 to the fourth liquid spray hole 613, and be sprayed onto the rotor body 301 through the fourth liquid spray hole 613 to cool the rotor body 301. As a result, the cooling medium can be sprayed onto a plurality of portions of the rotor assembly 300, further improving the cooling efficiency for the rotor assembly 300.

For example, a plurality of bearings 323 are provided. For example, the bearings 323 include a first bearing 320 and a second bearing 330, both ends of the rotor body 301 are supported on the main housing 100 and the end cover 600 through the first bearing 320 and the second bearing 330, respectively, the first liquid spray hole 135 is configured to spray the cooling medium toward one of the first bearing 320 and the second bearing 330, and the third liquid spray hole 612 is configured to spray the cooling medium to the other of the first bearing 320 and the second bearing 330. In this way, the first coolant passage 130 and the second coolant passage 610 can respectively control the cooling medium to cool the first bearing 320 and the second bearing 330, preventing the cooling medium from being concentrated on one bearing and resulting in less cooling medium being sprayed onto the other bearing. This ensures comparable heat dissipation effects for the first bearing 320 and the second bearing 330, leading to more uniform heat dissipation.

In some embodiments of the present disclosure, as shown in FIG. 1, the rotor body 301 includes a rotating shaft 310, a first end ring 340, and a second end ring 350.

The first end ring 340 and the second end ring 350 are respectively arranged at two ends of the rotating shaft 310. The second liquid spray hole 136 is configured to spray coolant toward the first end ring 340, and the fourth liquid spray hole 613 is configured to spray coolant toward the second end ring 350.

Specifically, a lamination assembly is connected onto the rotating shaft 310. The lamination assembly includes a plurality of laminations arranged in a stacked configuration along the axial direction of the rotating shaft 310. A first end ring 340 and a second end ring 350 are mounted at two axial ends of the lamination assembly on the rotating shaft 310, and are configured to limit and fix the plurality of laminations.

With such arrangement, the first coolant passage 130 and the second coolant passage 610 can respectively control the cooling medium to cool the first end ring 340 and the second end ring 350, preventing the cooling medium from being concentrated on one end ring and resulting in less cooling medium being sprayed onto the other end ring. This ensures comparable heat dissipation effects for the first end ring 340 and the second end ring 350, leading to more uniform heat dissipation.

In some embodiments of the present disclosure, as shown in FIG. 1, the rotating shaft 310 is a hollow shaft. This allows a cooling pipeline to be arranged inside the rotating shaft 310, enabling the cooling medium to flow within the interior of the rotating shaft 310. Consequently, the cooling medium can be configured to directly exchange heat with the rotating shaft 310 to cool the rotor assembly 300. Furthermore, during the rotation of the rotating shaft 310, the cooling medium can be flung out, thereby enabling the cooling medium to be distributed onto multiple components of the rotor assembly 300, such as the end rings and the bearings, further improving the cooling efficiency for the rotor assembly 300.

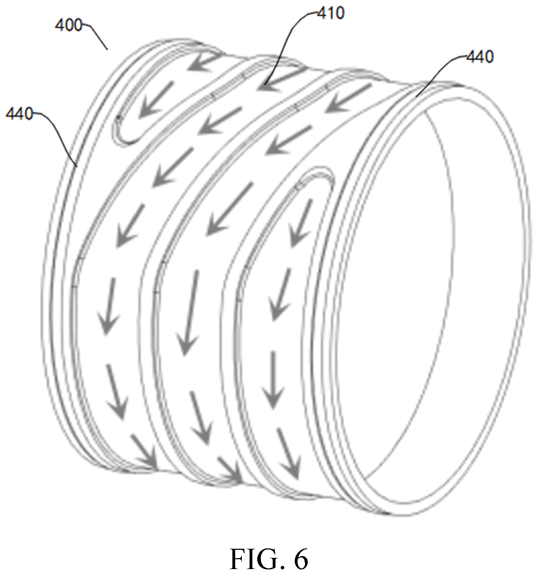

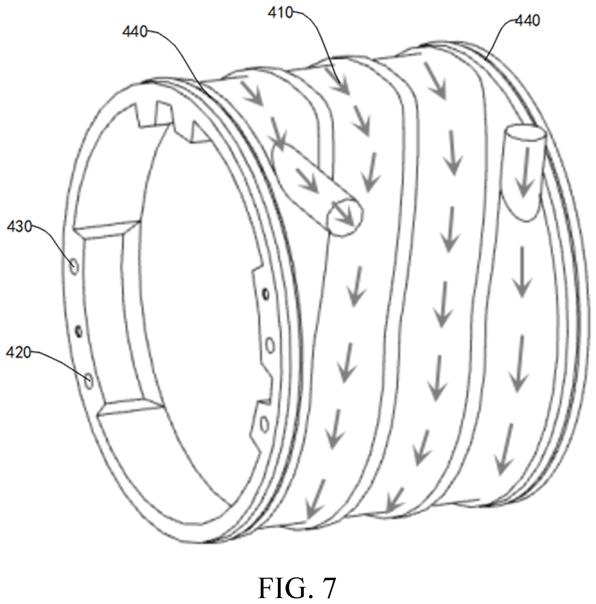

In some embodiments of the present disclosure, as shown in FIGS. 6 and 7, the motor 1 further includes a cooling jacket 400. At least a portion of the first cooling pipeline 410 is formed on the cooling jacket 400. The cooling jacket 400 is arranged on the outer periphery of the stator assembly 200.

By arranging the cooling jacket 400, the cooling jacket 400 can be sleeved onto the outer periphery of the stator assembly 200. The cooling jacket 400 can cool the stator assembly 200 via the cooling medium flowing within the first cooling pipeline 410. Moreover, the cooling jacket 400 can be tightly fitted to the outer peripheral surface of the stator assembly 200. The stator assembly 200 can transfer heat to the cooling jacket 400 through the portions fitted to the cooling jacket 400. This configuration is conducive to improving the uniformity of cooling for the stator assembly 200, ensuring that multiple portions of the stator assembly 200 can be uniformly cooled, and further enhancing the cooling effect on the stator assembly 200.

For example, the first cooling pipeline 410 spirals around the circumferential direction of the cooling jacket 400 and extends along the axial direction of the cooling jacket 400. Thus, the first cooling pipeline 410 can be distributed at multiple portions of the cooling jacket 400 along the axial direction of the cooling jacket 400, and the cooling medium within the first cooling pipeline 410 can flow in a spiral configuration. This configuration can increase the length of the first cooling pipeline 410, which is conducive to enhancing the heat exchange efficiency between the cooling medium and the stator assembly 200, resulting in higher heat dissipation efficiency of the cooling jacket 400 on the stator assembly 200 and a better cooling effect.

A stator coolant inlet 140 and a stator coolant outlet 150 can be arranged on the main housing 100. The stator coolant inlet 140 and the stator coolant outlet 150 are spaced apart along the axial direction of the stator assembly 200. The stator coolant inlet 140 is in communication with one end of the first cooling pipeline 410, and the stator coolant outlet 150 is in communication with the other end of the first cooling pipeline 410.

Thus, after the main housing 100 and the cooling jacket 400 are assembled and fixed, the stator coolant inlet 140 and the stator coolant outlet 150 are respectively in communication with the two ends of the first cooling pipeline 410, and the stator coolant inlet 140 and the stator coolant outlet 150 can be respectively connected to an inlet and an outlet of a water pump, thereby forming a circulating cooling medium flow path. This enables the cooling medium to circulate within the first cooling pipeline 410, so as to effectively cool the stator assembly 200.

Furthermore, by spacing the stator coolant inlet 140 and the stator coolant outlet 150 apart along the axial direction of the stator assembly 200, that is, spacing the stator coolant inlet 140 and the stator coolant outlet 150 apart along the axial direction of the cooling jacket 400, so that the stator coolant inlet 140 and the stator coolant outlet 150 can be positioned far apart from each other. Consequently, the length of the first cooling pipeline 410 can also be configured to be longer, facilitating the first cooling pipeline 410 to spiral around the circumferential direction of the cooling jacket 400 and extend along the axial direction of the cooling jacket 400, further improving the heat exchange efficiency between the cooling jacket 400 and the stator assembly 200.

In some embodiments of the present disclosure, as shown in FIG. 1, a sealing ring 450 is arranged between an outer peripheral surface of the cooling jacket 400 and an inner peripheral surface of the housing 700.

It will be understood that, in the prior art, the cooling jacket and the main housing are sealed by an adhesive bonding process. During secondary rework, the adhesive structure is prone to damage, presenting a relatively high risk of water leakage. In contrast, in the embodiment of the present disclosure, the main housing 100 and the cooling jacket 400 are sealed by the sealing ring 450. Even after secondary disassembly and assembly, excellent sealing performance can still be ensured. This can avoid damage to the sealing structure between the main housing 100 and the cooling jacket 400, resulting in a better sealing effect.

Furthermore, the cooling jacket 400 in the present disclosure is a separate component. When maintaining the motor 1, the cooling jacket 400 can be separately removed without requiring an overall rework, which is beneficial for reducing the cost of rework and replacement, effectively reducing the cost of labor and material resources.

Further, a plurality of sealing rings 450 are arranged. The plurality of sealing rings 450 are arranged on both sides of the first cooling pipe 410 in the axial direction of the cooling jacket 400, respectively. That is, at least one sealing ring 450 is sleeved on the cooling jacket 400 and is adjacent to one axial end of the cooling jacket 400, and at least one sealing ring 450 is sleeved on the cooling jacket 400 and is adjacent to the other axial end of the cooling jacket 400, so that the plurality of sealing rings 450 can respectively seal between two axial ends of the cooling jacket 400 and the main housing 100, thus preventing the water leakage issue between the cooling jacket 400 and the main housing 100.

Certainly, it will be understood that a plurality of sealing rings 450 may be arranged at one end of the cooling jacket 400, and a plurality of sealing rings 450 may also be arranged at the other end of the cooling jacket 400, so that the plurality of sealing rings 450 can simultaneously seal one end of the cooling jacket 400, and the plurality of sealing rings 450 can simultaneously seal the other end of the cooling jacket 400. Even if one of the plurality of sealing rings 450 fails to seal, the remaining sealing rings 450 can still ensure the sealing between the cooling jacket 400 and the main housing 100, effectively preventing sealing failure between the main housing 100 and the cooling jacket 400.

A plurality of sealing grooves 440 may be arranged on an outer peripheral surface of the cooling jacket 400, and the plurality of sealing rings 450 are arranged in the plurality of sealing grooves 440. In this way, the plurality of sealing rings 450 can be correspondingly mounted in the plurality of sealing grooves 440. On one hand, the sealing grooves 440 can be configured to pre-position the sealing rings 450, which is conducive to simplifying the assembly steps between the sealing rings 450 and the cooling jacket 400 and facilitating installation. On the other hand, the sealing grooves 440 can be configured to fix the position of the sealing rings 450, preventing the sealing rings 450 from positional deviation, and simultaneously preventing the sealing rings 450 from twisting or deformation. This enables the sealing rings 450 to be tightly fitted to the cooling jacket 400 and the main housing 100 respectively, further improving the sealing effect of the sealing rings 450.

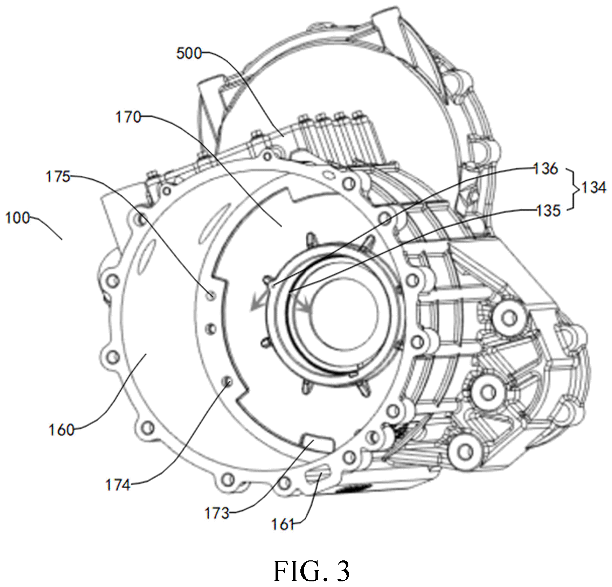

In some embodiments of the present disclosure, as shown in FIG. 3, the main housing 100 includes an annular portion 160 and an end portion 170.

The annular portion 160 surrounds the stator assembly 200. The cooling jacket 400 is located between the annular portion 160 and the stator assembly 200. The end portion 170 is connected to one end of the annular portion 160 and retains the stator assembly 200 and the cooling jacket 400. The rotor assembly 300 passes through the end portion 170. The cooling jacket 400 is connected to the end portion 170.

As such, the cooling jacket 400, the stator assembly 200, and the rotor assembly 300 can all be arranged within the main housing 100. The annular portion 160 can radially position the cooling jacket 400, the stator assembly 200, and the rotor assembly 300. Moreover, the end portion 170 can axially position the cooling jacket 400, the stator assembly 200, and the rotor assembly 300 from one axial end of the main housing 100, enabling the cooling jacket 400, the stator assembly 200, and the rotor assembly 300 to be fixed within the main housing 100.

Furthermore, by connecting the cooling jacket 400 to the end portion 170, the relative position between the cooling jacket 400 and the main housing 100 can be fixed, so that the cooling jacket 400 and the main housing 100 do not rotate relatively, and the cooling jacket 400 is not easily separated from the main housing 100, and the relative position between the stator assembly 200 and the main housing 100 can be fixed to avoid the relative deviation of the position between the stator assembly 200 and the main housing 100.

Additionally, it will be understood that the end portion 170 is connected to one end of the annular portion 160 and can retain the stator assembly 200. The rotor assembly 300 passes through the end portion 170. The annular portion 160 is mainly configured to form a space for mounting the rotor assembly 300 and the stator assembly 200. In order to prevent the motor 1 from being excessively large in volume, the wall thickness of the annular portion 160 is usually relatively thin, while the wall thickness of the end portion 170 can be relatively thick. This facilitates forming a portion of the second cooling pipeline 110 within the end portion 170, which not only eases machining and facilitates the flow of the cooling medium within the second cooling pipeline 110, but also avoids causing the structural strength of the end portion 170 to be too low.

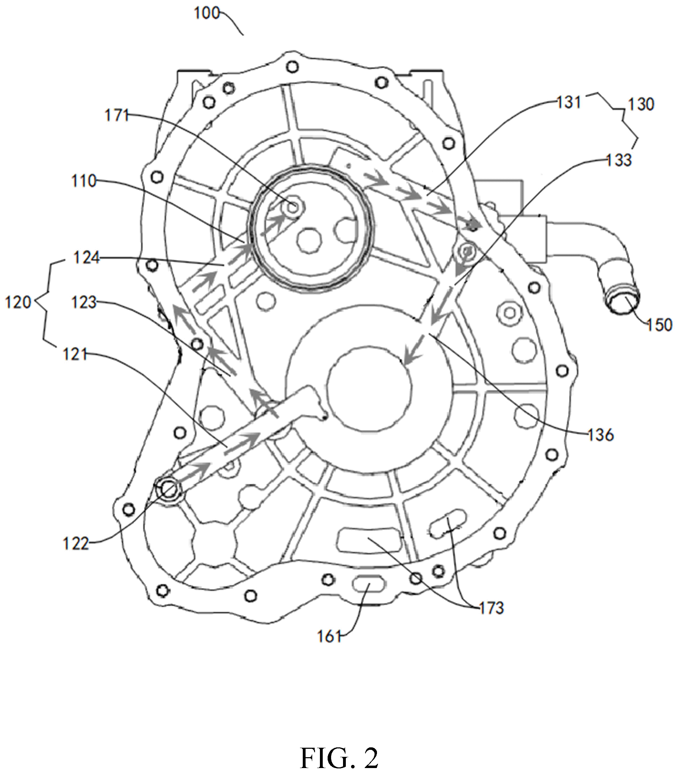

In some embodiments of the present disclosure, as shown in FIG. 2, a liquid return hole 173 is arranged in the end portion 170. The liquid return hole 173 is located at a lower side of the end portion 170 and extends through the end portion 170 in the axial direction of the end portion 170.

It will be understood that after the motor 1 is assembled and fixed, the position of the main housing 100 is also relatively fixed. The statement that the liquid return hole 173 is located at the lower side of the end portion 170 means that, after the motor 1 is assembled and fixed, the liquid return hole 173 is located at the lower side of the end portion 170 in the up-down direction of the vehicle, so that the cooling medium sprayed onto the rotor assembly 300 by the first liquid spray hole 135 and the second liquid spray hole 136 can naturally flow to the liquid return hole 173 under the action of gravity, and flow out of the main housing 100 through the liquid return hole 173. This achieves recycling of the cooling medium and simultaneously avoids excessive accumulation of the cooling medium within the main housing 100, enabling the motor 1 to operate normally.

One or a plurality of liquid return holes 173 may be arranged, and the plurality of liquid return holes 173 may be spaced apart along a circumferential direction of the end portion 170, so that the plurality of liquid return holes 173 enable simultaneous liquid return, resulting in an enhanced return flow rate.

In some embodiments of the present disclosure, as shown in FIGS. 1 and 4, a liquid return groove 620 is arranged in a lower side of a surface of the end cover 600 facing the main housing 100, the main housing 100 is arranged with a liquid return passage 161, and the liquid return passage 161 extends along an axial direction of the rotor assembly 300 and is in communication with the liquid return groove 620.

After the end cover 600 and the main housing 100 are assembled, the liquid return groove 620 of the end cover 600 is in communication with the liquid return passage 161 of the main housing 100, a portion of the liquid return passage 161 extends along an axial direction of the annular portion 160 and extends through a side of the annular portion 160 facing the end cover 600, and another portion of the liquid return passage 161 is arranged in the end portion 170and extends through a side of the end portion 170 away from the annular portion 160. In this way, the cooling medium flowing out of a third rotor coolant outlet 611 can naturally flow to the liquid return groove 620 under the action of gravity, and flow out of the main housing 100 through the liquid return passage 161. This achieves recycling of the cooling medium and simultaneously avoids excessive accumulation of the cooling medium within the main housing 100, enabling the motor 1 to operate normally.

It is to be noted that the liquid return passage 161 and the liquid return hole 173 are not in communication with each other and the liquid return hole 173 may be arranged on the radially inward of the liquid return passage 161, so that the cooling medium flowing out from the second rotor coolant outlet 134 and the cooling medium flowing out from the third rotor coolant outlet 611 can be separately returned through the liquid return hole 173 and the liquid return passage 161, respectively, allowing the cooling medium to flow out of the main housing 100 more smoothly, thereby further increasing the return flow rate of the cooling medium.

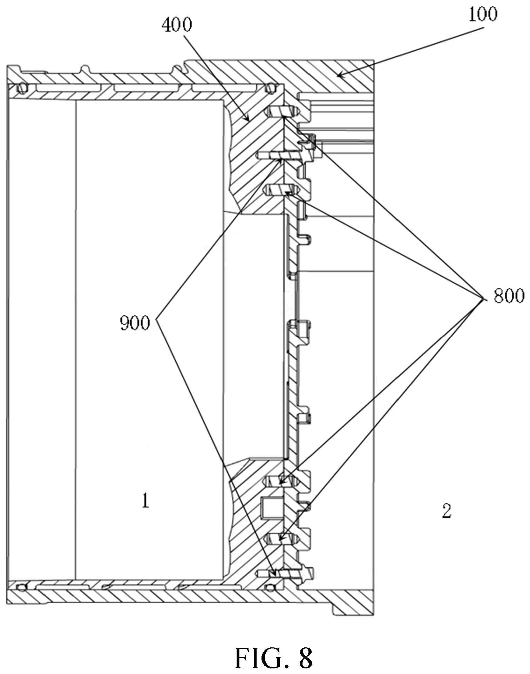

In some embodiments of the present disclosure, as shown in FIGS. 3 and 7, the motor 1 further includes a locating pin 800 and a fastener 900, as shown in FIG. 8.

The cooling jacket 400 and the end portion 170 are positioned relative to each other by the locating pin 800. The fastener 900 passes through the end portion 170 and is connected to the cooling jacket 400.

For example, an end of the cooling jacket 400 facing the end portion 170 may be arranged with a first locating pin hole 420 and a first fastener hole 430. A side of the end portion 170 facing the cooling jacket 400 may be arranged with a second locating pin hole 174 and a second fastener hole 175. During assembly of the cooling jacket 400 and the main housing 100, the locating pin 800 may be inserted into the first locating pin hole 420 and the second locating pin hole 174 to position the cooling jacket 400 and the end portion 170 of the main housing 100, subsequently, the fastener 900 may be inserted into the first fastener hole 430 and the second fastener hole 175 to fixedly connect the cooling jacket 400 and the end portion 170 of the main housing 100.

Further, as shown in FIGS. 3, 7, and 8, a plurality of locating pins 800 are arranged and are respectively arranged on opposite sides in the radial direction of the cooling jacket 400. A plurality of fasteners 900 are arranged and are respectively arranged on opposite sides in the radial direction of the cooling jacket 400.In this way, the plurality of locating pins 800 can simultaneously preposition the cooling jacket 400 and the main housing 100, which is beneficial for improving positioning accuracy between the cooling jacket 400 and the main housing 100, and preventing relative rotation between the cooling jacket 400 and the main housing 100, so that the cooling jacket 400 is connected to the main housing 100 via the fasteners 900, the fasteners 900 can fixedly connect the opposite radial sides of the cooling jacket 400 to the main housing 100, thereby enhancing connection stability between the cooling jacket 400 and the main housing 100, and more effectively preventing relative rotation between the cooling jacket 400 and the main housing 100.

In some embodiments of the present disclosure, as shown in FIG. 1, a clearance fit is arranged between the annular portion 160 and the cooling jacket 400. It will be understood that a sealing ring 450 needs to be assembled between the annular portion 160 of the main housing 100 and the cooling jacket 400. By arranging the clearance fit between the annular portion 160 and the cooling jacket 400, a reserved space can be provided for installation of the sealing ring 450, thereby facilitating assembly. Furthermore, an outer diameter of the cooling jacket 400 may be smaller than an inner diameter of the annular portion 160, so that the cooling jacket 400 can be more easily assembled into the annular portion 160, which is beneficial for simplifying assembly steps of the cooling jacket 400 and the main housing 100, making the assembly more convenient and faster.

In some embodiments of the present disclosure, as shown in FIGS. 2 and 3, the motor 1 further includes a radiator 500 and a liquid inlet passage 120. The radiator 500 is an oil cooler.

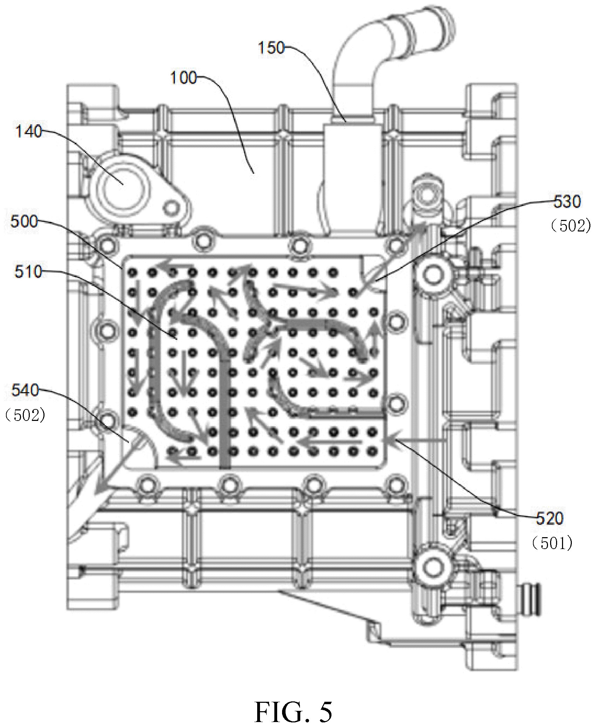

As shown in FIG. 5, the liquid inlet passage 120 is arranged in the main housing 100, and the radiator 500 is arranged in the main housing 100. An inlet 501 of the radiator 500 is in communication with the liquid inlet passage 120. An outlet 502 of the radiator 500 is in communication with the second cooling pipeline 110. The radiator 500 is configured to exchange heat with a coolant flowing through the second cooling pipeline 110.

That is to say, the liquid inlet passage 120 is in communication with the second cooling pipeline 110 via the radiator 500.

By arranging the radiator 500 in the main housing 100, that is, by integrating the radiator 500 and the main housing 100 together, the overall volume of the radiator 500 and the main housing 100 is advantageously reduced, thereby reducing the volume of the motor 1.

For example, a cooling water channel may be arranged inside the radiator 500, and the cooling water channel is not in communication with the second cooling pipeline 110, that is, the cooling water channel and the second cooling pipeline 110 are in different spaces, or in other words, the cooling water channel and the second cooling pipeline 110 are located in different layers. The cooling water channel may be in communication with a water pump, so as to be driven by the water pump to circulate water within the cooling water channel. When the cooling medium in the second cooling pipeline 110 flows through the radiator 500, it can exchange heat with the water in the cooling water channel, thereby cooling the cooling medium.

For example, if the cooling medium in the second cooling pipeline 110 is oil, then the temperature of the oil can be lowered when the oil passes through the radiator 500, thereby improving the cooling effect of the oil on the rotor assembly 300.

Thus, the cooling medium can enter the main housing 100 from the liquid inlet passage 120, then heat is dissipated from the cooling medium by passing through the radiator 500, and subsequently the cooling medium is sprayed onto the rotor assembly 300 via the first coolant passage 130 of the second cooling pipeline 110. Consequently, low-temperature cooling medium can be directly sprayed onto an outer surface of the rotor assembly 300, thereby directly dissipating heat from the rotor assembly 300 and achieving an improved cooling effect on the rotor assembly 300.

The radiator 500 may be arranged on the annular portion 160. The end portion 170 is arranged with a first passage 171 and a second passage extending through in the axial direction thereof. The liquid inlet passage 120 is in communication with the radiator 500 via the first passage 171. The first coolant passage 130 is in communication with the radiator 500 via the second passage.

In an embodiment, the radiator 500 may be mounted on an outer peripheral surface of the annular portion 160, and one end of the radiator 500 is close to the end portion 170. This arrangement facilitates communicating the first passage 171 with the one end of the radiator 500, as well as communicating the second passage with the one end of the radiator 500. The cooling medium for cooling the rotor assembly 300 can flow sequentially through the liquid inlet passage 120, the first passage 171, the radiator 500, the second passage, and the first coolant passage 130, and then flow to the rotor assembly 300.

In some embodiments of the present disclosure, as shown in FIG. 2, the liquid inlet passage 120 includes a first oil passage 121, a second oil passage 123, and a third oil passage 124.

A lower end of the first oil passage 121 is arranged with a rotor coolant inlet 122. The first oil passage 121 extends obliquely from bottom to top toward an interior of the main housing 100. A lower end of the second oil passage 123 is connected to an upper end of the first oil passage 121. The second oil passage 123 extends obliquely from bottom to top toward an exterior of the main housing 100. A lower end of the third oil passage 124 is connected to an upper end of the second oil passage 123. An upper end of the third oil passage 124 is in communication with the radiator 500. The third oil passage 124 extends obliquely from bottom to top toward the interior of the main housing 100.

An outer peripheral surface of the end portion 170 is arranged with a first process hole. The upper end of the second oil passage 123 and the lower end of the third oil passage 124 are respectively in communication with the first process hole.

The lower end of the first oil passage 121 is away from the center of the end portion 170, and the upper end of the first oil passage 121 is close to the center of the end portion 170. The lower end of the second oil passage 123 is close to the center of the end portion 170, and the upper end of the second oil passage 123 is away from the center of the end portion 170. The lower end of the third oil passage 124 is away from the center of the end portion 170, and the upper end of the third oil passage 124 is close to the center of the end portion 170.

With this configuration, the liquid inlet passage 120 can be divided into a plurality of oil passages, the length of each oil passage can be shorter, and the upper end of the second oil passage 123 and the lower end of the third oil passage 124 can be closer to the outer peripheral surface of the end portion 170. This facilitates machining the second oil passage 123 and the third oil passage 124 in different directions through the first process hole, respectively, which is beneficial for simplifying the machining process of the liquid inlet passage 120 in the end portion 170, making the machining more convenient.

In some embodiments of the present disclosure, as shown in FIG. 2, the first coolant passage 130 includes a fourth oil passage 131 and a fifth oil passage 133.

The fourth oil passage 131 extends obliquely downward from top to bottom toward an exterior of the main housing 100. An upper end of the fifth oil passage 133 is connected to a lower end of the fourth oil passage 131. The fifth oil passage 133 extends obliquely downward from top to bottom toward an interior of the main housing 100. A lower end of the fifth oil passage 133 is arranged with a first liquid spray hole 135 and a second liquid spray hole 136. One of the fourth oil passage 131 and the fifth oil passage 133 is in communication with the second passage. The first liquid spray hole 135 and the second liquid spray hole 136 are located on a lower side of the second passage. The outer peripheral surface of the end portion 170 is arranged with a second process hole. The lower end of the fourth oil passage 131 and the upper end of the fifth oil passage 133 are respectively in communication with the second process hole.

The upper end of the fourth oil passage 131 is close to a center of the end portion 170, and the lower end of the fourth oil passage 131 is away from the center of the end portion 170. The upper end of the fifth oil passage 133 is away from the center of the end portion 170, and the lower end of the fifth oil passage 133 is close to the center of the end portion 170.In this way, the first coolant passage 130 can be divided into a plurality of oil passages, the length of each oil passage can be shorter, and the lower end of the fourth oil passage 131 and the upper end of the fifth oil passage 133 can be close to the outer peripheral surface of the end portion 170. This facilitates machining the fourth oil passage 131 and the fifth oil passage 133 in different directions through the second process hole, respectively, which is beneficial for simplifying the machining process of the first coolant passage 130 in the end portion 170, making the machining process simpler.

In an embodiment, the fourth oil passage 131 may be in communication with the second passage. The cooling medium flowing out from the second passage can flow to the rotor assembly 300 through the fourth oil passage 131, the fifth oil passage 133, the first liquid spray hole 135, and the second liquid spray hole 136, so as to cool the rotor assembly 300.

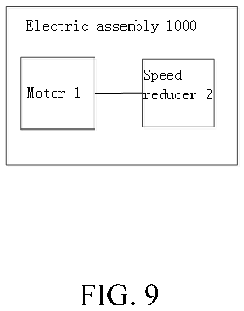

The electric assembly 1000 according to an embodiment of the present disclosure will be described below with reference to the accompanying drawings. As shown in FIG. 9, the electric assembly 1000 includes a speed reducer 2 and the motor 1 according to the above-described embodiment of the present disclosure. An output shaft of the speed reducer 2 and the rotating shaft 310 of the motor 1 are coaxially arranged.

With the electric assembly 1000 according to an embodiment of the present disclosure, by utilizing the motor 1 according to the above-described embodiment of the present disclosure, different cooling media can be used to respectively cool the stator assembly 200 and the rotor assembly 300, so as to improve the cooling efficiency for the stator assembly 200 and the rotor assembly 300, achieving better cooling uniformity and heat dissipation effect, and beneficial for improving the output efficiency of the motor 1.

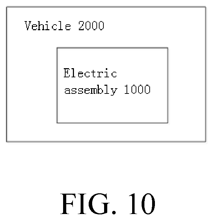

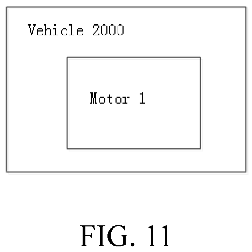

The vehicle 2000 according to an embodiment of the present disclosure will be described below with reference to the accompanying drawings. As shown in FIGS. 10 and 11, the vehicle 2000 includes the motor 1 according to the above-described embodiment of the present disclosure, or the electric assembly 1000 according to the above-described embodiment of the present disclosure.

With the vehicle 2000 according to an embodiment of the present disclosure, by utilizing the motor 1 or the electric assembly 1000 according to the above-described embodiment of the present disclosure, the stator assembly 200 and the rotor assembly 300 can be cooled respectively, so as to improve the cooling efficiency for the stator assembly 200 and the rotor assembly 300, achieving better cooling uniformity and heat dissipation effect, and beneficial for improving the output efficiency of the motor 1.

Other configurations and operations of the motor 1, the electric assembly 1000, and the vehicle 2000 according to the embodiments of the present disclosure are known to a person skilled in the art and will not be described in detail herein.

In the description of the present specification, a description with reference to the terms "one embodiment," "some embodiments," "exemplary embodiments," "examples," "specific examples," or "some examples," etc. means that a specific feature, structure, material, or characteristic described in connection with the embodiment or example is included in at least one embodiment or example of the present disclosure. In the present specification, schematic expressions of the above terms do not necessarily refer to the same embodiments or examples.

While embodiments of the present disclosure have been shown and described, a person skilled in the art will understand that various changes, modifications, substitutions, and variations can be made to these embodiments without departing from the principles and spirits of the present disclosure, the scope of which is defined by the claims and their equivalents.

## Claims

1. A motor (1), comprising:
a housing (700);
a stator assembly (200);
a rotor assembly (300);
a first cooling pipeline (410); and
a second cooling pipeline (110), a cooling medium flowing through the first cooling pipeline (410) being different from that flowing through the second cooling pipeline (110), the first cooling pipeline (410) being configured to cool the stator assembly (200), the second cooling pipeline (110) being configured to cool the rotor assembly (300), and at least a portion of the second cooling pipeline (110) being formed on the housing (700).

2. The motor (1) according to claim 1, wherein the housing (700) comprises:
a main housing (100); and
an end cover (600), the main housing (100) and the end cover (600) form a receiving cavity (601), the stator assembly (200) and the rotor assembly (300) are arranged within the receiving cavity (601), and at least a portion of the second cooling pipeline (110) is formed on the main housing (100) and/or the end cover (600).

3. The motor (1) according to claim 2, wherein the rotor assembly (300) comprises:
a rotor body (301); and
a bearing (323), the rotor body (301) is mounted on the main housing (100) and the end cover (600) via the bearing (323);
wherein the second cooling pipeline (110) comprises a first coolant passage (130) formed on the main housing (100), a first liquid spray hole (135) is arranged on the main housing (100), the first liquid spray hole (135) is in communication with the first coolant passage (130), the first liquid spray hole (135) is configured to spray coolant toward the bearing (323); and/or
a second liquid spray hole (136) is arranged on the main housing (100), the second liquid spray hole (136) is in communication with the first coolant passage (130), and the second liquid spray hole (136) is configured to spray coolant toward the rotor body (301).

4. The motor (1) according to claim 3, wherein the second cooling pipeline (110) further comprises a second coolant passage (610) formed on the end cover (600), a third liquid spray hole (612) is arranged on the end cover (600), the third liquid spray hole (612) is in communication with the second coolant passage (610), and the third liquid spray hole (612) is configured to spray coolant toward the bearing (323); and/or
a fourth liquid spray hole (613) is arranged on the end cover (600), the fourth liquid spray hole (613) is in communication with the second coolant passage (610), and the fourth liquid spray hole (613) is configured to spray coolant toward the rotor body (301).

5. The motor (1) according to claim 4, wherein the rotor body (301) comprises:
a rotating shaft (310);
a first end ring (340); and
a second end ring (350), the first end ring (340) and the second end ring (350) are respectively arranged at two ends of the rotating shaft (310), the second liquid spray hole (136) is configured to spray coolant toward the first end ring (340), and the fourth liquid spray hole (613) is configured to spray coolant toward the second end ring (350).

6. The motor (1) according to claim 5, wherein the rotating shaft (310) is a hollow shaft.

7. The motor (1) according to any one of claims 2 to 6, wherein the motor (1) further comprising:
a cooling jacket (400), at least a portion of the first cooling pipeline (410) is formed on the cooling jacket (400), and the cooling jacket (400) is arranged on an outer periphery of the stator assembly (200).

8. The motor (1) according to claim 7, wherein a sealing ring (450) is arranged between an outer peripheral surface of the cooling jacket (400) and an inner peripheral surface of the main housing (100).

9. The motor (1) according to claim 7 or 8, wherein the main housing (100) comprises:
an annular portion (160), the annular portion (160) surrounds the stator assembly (200), the cooling jacket (400) is located between the annular portion (160) and the stator assembly (200); and
an end portion (170),the end portion (170) is connected to one end of the annular portion (160) and retains the stator assembly (200) and the cooling jacket (400), the rotor assembly (300) passes through the end portion (170), and the cooling jacket (400) is connected to the end portion (170).

10. The motor (1) according to claim 9, further comprising:
a locating pin (800), the cooling jacket (400) and the end portion (170) are positioned relative to each other by the locating pin (800); and
a fastener (900), the fastener (900) passes through the end portion (170) and is connected to the cooling jacket (400).

11. The motor (1) according to any one of claims 2 to 10, further comprising:
a radiator (500), the radiator (500) is arranged in the main housing (100); and
a liquid inlet passage (120), the liquid inlet passage (120) is arranged in the main housing (100), an inlet (501) of the radiator (500) is in communication with the liquid inlet passage (120), an outlet (502) of the radiator (500) is in communication with the second cooling pipeline (110), and the radiator (500) is configured to exchange heat with a coolant flowing through the second cooling pipeline (110).

12. The motor (1) according to claim 11, wherein the liquid inlet passage (120) comprises:
a first oil passage (121), a lower end of the first oil passage (121) is arranged with a rotor coolant inlet (122), and the first oil passage (121) extends obliquely from bottom to top toward an interior of the main housing (100);
a second oil passage (123), a lower end of the second oil passage (123) is connected to an upper end of the first oil passage (121), and the second oil passage (123) extends obliquely from bottom to top toward an exterior of the main housing (100); and
a third oil passage (124), a lower end of the third oil passage (124) is connected to an upper end of the second oil passage (123), an upper end of the third oil passage (124) is in communication with the radiator (500), and the third oil passage (124) extends obliquely from bottom to top toward the interior of the main housing (100).

13. The motor (1) according to any one of claims 3 to 6, wherein the first coolant passage (130) comprises:
a fourth oil passage (131), the fourth oil passage (131) extends obliquely downward from top to bottom toward an exterior of the main housing (100); and
a fifth oil passage (133), an upper end of the fifth oil passage (133) is connected to a lower end of the fourth oil passage (131), and the fifth oil passage (133) extends obliquely downward from top to bottom toward an interior of the main housing (100).

14. An electric assembly (1000), comprising a speed reducer (2) and the motor (1) according to any one of claims 1 to 13, and an output shaft of the speed reducer (2) and the rotating shaft (310) of the motor (1) being coaxially arranged.

15. A vehicle (2000), comprising the motor (1) according to any one of claims 1 to 13, or the electric assembly (1000) according to claim 14.
